# EUROPÄISCHE PATENTANMELDUNG

(11) **EP 1 153 738 A1**
(43) Veröffentlichungstag der Anmeldung: **14.11.2001**
(21) Anmeldenummer: 01109825.8
(22) Anmeldetag: 21.04.2001
(51) Int. Cl.: B32B 5/28, B32B 13/14, E04F 13/14, E04C 2/26, E04C 2/34

(54) **Grossformatige Arbeits-, Wand oder Bodenplatte**

(30) Priorität: 09.05.2000 DE 10022451
(71) Anmelder: Schraps, Günter, 99880 Waltershausen (DE)
(72) Erfinder: Schraps, Günter, 99880 Waltershausen (DE)
(74) Vertreter: Sparing - Röhl - Henseler Patentanwälte

(57) **Zusammenfassung**

Die Erfindung betrifft eine großformatige Arbeits-, Wand- oder Bodenplatte in Form einer Verbundplatte mit einer Deckschicht (5) aus Naturstein, die sich auf einer rückseitigen, einen Schaum enthaltenden Trägerschicht befindet, wobei die Trägerschicht eine Stabilisierungsschicht (1') für den Naturstein in Form einer in einem Harz eingebetteten Mineralfasermatte, eine zwischen dieser und einer weiteren Stabilisierungsschicht (1) in Form einer in einem Harz eingebetteten Mineralfasermatte eingebetteten Zwischenschicht (4) aus einem Hartschaum umfaßt, wobei die Deckschicht (5) eine Stärke etwa von 3 bis 8 mm, insbesondere etwa 4 bis 5 mm, aufweist.

## Beschreibung

Die Erfindung betrifft eine großformatige Arbeits-, Wand- oder Bodenplatte nach dem Oberbegriff des Anspruchs 1.

Großformatige Natursteinplatten, d.h. solche mit Abmessungen von wenigstens etwa 50 cm Kantenlänge, wie etwa aus Granit, Marmor oder anderem Gestein werden beispielsweise als Bodenplatten, Doppelbodenplatten, Fliesen, Fassadenplatten, Küchenarbeitsplatten od.dgl. verwendet. Um eine entsprechende Stabilität derartiger Platten aus massivem Naturstein zu erhalten, sind erhebliche Stärken notwendig, die zugleich ein entsprechendes Gewicht mit sich bringen. Dies gilt insbesondere dann, wenn die Platten nachträglich einer Oberflächenbehandlung etwa durch Schleifen und Polieren unterzogen werden sollen.

Aus DE 93 10 954 U1 ist eine Dekorplatte mit einer Deckschicht aus Naturstein bekannt, die sich auf einer rückseitigen, anorganischen Verstärkungsschicht befindet, die durch Verwendung von Wasserstoffperoxid stark aufgeschäumt ist und/oder leichte Füllstoffe wie Altglas, Holz- oder Kunststoffspäne sowie gegebenenfalls darin eine eingebettete Verstärkungsmatte oder -gitter enthält. Eine derartige Verbundplatte besitzt jedoch keine ausreichende Stabilität bei geringen Natursteindicken. Vielmehr muß bei flächenmäßig großen Platten der Naturstein wesentlich zur Festigkeit beitragen und dementsprechend dick sein, wodurch sich zudem ein entsprechendes Gewicht ergibt.

Ferner ist aus DE 36 02 537 A1 ein mehrschichtiges, plattenförmiges Fertigteilbauelement etwa für Fassaden bekannt, das eine rückseitige, tragende Betonschicht etwa aus Schaum- oder Porenbeton aufweist, an der eine Außenschicht aus Naturstein gegebenenfalls unter Zwischenschaltung einer Wärmedämmschicht aus Mineralwolle, Hartfaser oder dergleichen, gegebenenfalls beidseitig mit Sperrfolien aus Kunststoff oder Metall versehen, über Anker befestigt ist. Auch derartige Fertigbauelemente benötige relativ dicke Natursteinplatten als Außenschichten.

Aus DE 37 09 224 A1 ist ein Natursteinplattenelement etwa zur Wand-, Decken- oder Fußbodenverkleidung bekannt, das aus einer dünnen Natursteinplatte und einer Trägerplatte gebildet wird, die mit der Natursteinplatte verklebt ist, etwa aus PU-Schaumstoff besteht und beidseitig mit glasfaserverstärkten Kunststoff, z.B. Polyesterharz, versehen ist. Hierbei wird eine Natursteinplatte beidseitig mit einer Trägerplatte versehen und dann durchgesägt, so daß zwei Plattenelemente mit dünner Natursteinplatte entstehen. Jedoch weisen derartige Plattenelemente keine ausreichende, aber für viele Anwendungsfälle notwendige Festigkeit aus, so etwa bei Küchenarbeits- oder Bodenplatten, die gegebenenfalls punktuellen Schlag- und Biegebeanspruchungen ausgesetzt werden, es sei denn, die Dicke der Natursteinplatte wird entsprechend stark erhöht.

Außerdem ist aus DE 198 05 294 A1 eine Natursteinplatte mit rückseitiger Schaumschicht bekannt, in die ein Glasfasergewebe eingeschäumt ist. Auch hierbei werden für großformatige Platten entsprechende Natursteindicken benötigt.

Aufgabe der Erfindung ist es, eine großformatige Arbeits-, Wand- oder Bodenplatte entsprechend dem Oberbegriff des Anspruchs 1 zu schaffen, bei der trotz der notwendigen Festigkeit die Stärke des Natursteins und damit das Gewicht der Platte möglichst gering ist.

Diese Aufgabe wird entsprechend dem kennzeichnenden Teil des Anspruchs 1 gelöst.

Dadurch, daß eine Natursteinplatte verwendet wird, die rückseitig eine Stabilisierungsschicht als Teil einer Trägerschicht für den Naturstein in Form einer in einem Harz eingebetteten Mineralfasermatte aufweist, wobei weiter zwischen dieser Stabilisierungsschicht und einer weiteren Stabilisierungsschicht ebenfalls in Form einer in einem Harz eingebetteten Mineralfasermatte eine Zwischenschicht aus einem Hartschaum eingebettet ist, wobei die Deckschicht eine Stärke etwa von 3 bis 8 mm, insbesondere etwa 4 bis 5 mm, aufweist, erhält man trotz der relativ geringen Stärke des Naturstein die notwendige Festigkeit und damit ein entsprechend geringes Gewicht.

Bei dem zum Einbetten der jeweiligen Mineralfasermatte aus einem Gewebe oder Vlies aus Mineralfasern wie Glas- bzw. Silikatfasern verwendeten Harz kann ein Polyurethan-Kleber oder Epoxidharz-Kleber verwendet werden. Als Hartschaum kann ein Polyurethan-Schaum verwendet werden.

Die Zwischenschicht kann ein Granulat enthalten, dessen Zwischenräume von dem Hartschaum ausgefüllt sind.

Man kann in einem vorbestimmten Abstand zu einer beiderseits mit einer Stabilisierungsschicht versehenen Natursteinplatte jeweils eine rückseitige Stabilisierungsschicht oder -platte anordnen, die beiden Zwischenräume zwischen der Natursteinplatte und den beiden rückseitigen Platten mit einem Granulat füllen und anschließend ausschäumen, wonach die Natursteinplatte längs ihrer Mittelebene zerteilt wird. So erhält man Verbundplatten mit einer Deckschicht aus Naturstein, die sehr dünn sein kann, beispielsweise eine Stärke etwa von 3 bis 8 mm, insbesondere etwa 4 bis 5 mm, aufweist. Trotzdem besitzt eine derartige Verbundplatte die für den jeweiligen Anwendungszweck notwendige Festigkeit und kann daher auch nachträglich etwa durch Schleifen und Polieren bearbeitet werden. Beim Zerteilen der Natursteinplatte längs ihrer Mittelebene bieten die beidseitig davon vorher ausgebildeten Trägerschichten die notwendige Festigkeit und Stabilisierung der bereits an sich relativ dünnen Natursteinplatte.

Hierbei dient die Deckschicht aus Naturstein in erster Linie dekorativen Zwecken, aber natürlich auch der Aufnahme von statischen und dynamischen als auch Biegebelastungen, die an darunter liegende Schichten weitergeleitet werden, als auch von thermischen und chemischen Belastungen. Die Oberfläche kann hart und glatt und damit hygienisch sowie kratz- und wischfest, d.h. pflegeleicht sein. Die Stärke der Deckschicht richtet sich nach den zu erfüllenden Funktionen und dem zu erreichenden Gebrauchswert der Verbundplatte.

Die rückseitige Stabilisierungsschicht dient zur Aufnahme von Biegezugspannungen und von Schwindspannungen der Trägerschicht, die am Naturstein zu Verformungen führen könnten, und ermöglicht eine relativ dünne Gesamtstärke der Verbundplatte. Außerdem dient die rückseitige Stabilisierungsschicht oder -platte als Schalung bei der Ausbildung der restlichen Trägerschicht.

Durch die Verwendung einer Schalung bei der Herstellung der Trägerschicht(en) in Form von zwei rückseitigen Platten und einer Natursteinplatte, die später geteilt wird, lassen sich die Stärketoleranzen der Verbundplatte auch sehr großflächig (Küchenarbeitsplatten haben beispielsweise Abmessungen von etwa 250 bis 300 cm x 65 cm) sehr genau einhalten, während die Natursteinplatte selbst größere Stärketoleranzen aufweisen kann, die auch durch eine rückseitige Stabilisierungsschicht auftreten oder vergrößert sein können.

Die Trägerschicht kann insbesondere dadurch ausgebildet werden, daß zunächst ein Granulat, insbesondere ein Schaumglasgranulat beispielsweise mit einer Körnung zwischen 3 und 6 mm, zwischen Deckschicht und rückseitiger Stabilisierungsschicht eingefüllt wird. An den Berührungspunkten der Körner des Granulats findet in der fertigen Verbundplatte die Druckübertragung und Druckverteilung statt, so daß ein praktisch nur auf Druck beanspruchbares Raumtragwerk gebildet wird. Die Hohlräume zwischen dem Granulat werden mit einem Schaum, etwa einem Polyurethanschaum ausgefüllt, der zur Aufnahme von Zug-, Druck- und Scherspannungen dient und abgesehen von der Einbettung des Granulats die Verklebung mit den Stabilisierungsplatten bewirkt. Bewehrungsnadeln aus Kunststoff oder Mineralfasern, die in dem Schaum eingelagert werden können, erhöhen die Festigkeit zusätzlich. Die Stärke dieser Schicht richtet sich nach dem Einsatzzweck der Verbundplatte. Die Trägerschicht wirkt wie ein Raumtragwerk mit dem Granulat als Raumgitter.

Als Granulat läßt sich beispielsweise auch ein Schaumglas- oder Blähtongranulat einsetzen.

Aufgrund der so gebildeten Trägerschicht ergibt sich nicht nur eine hohe Druckfestigkeit, die sich auch für Doppelbodenplatten eignet, sondern es lassen sich auch hohe Trittschall- und Wärmedämmwerte bei geringem Eigengewicht erzielen. Außerdem ergibt sich eine gute Verarbeitungsfähigkeit bei geringem Produktionsaufwand und geringem Einsatz an Naturstein.

Zusätzlich ist es möglich, in die Trägerschicht Rohre für verschiedene Zwecke (Leerrohre für Installationen, Heizungsrohre od.dgl.) und/oder Halterungen für die Montage zu integrieren. So lassen sich Bodenplatten mit integrierten Bodenheizungseinrichtungen herstellen.

Die Gefahr einer "Aufschüsselung", wie sie bei der Verlegung von massiven Natursteinplatten besteht, ist hier nicht vorhanden. Trotzdem läßt sich die Natursteinoberfläche auch noch nach dem Verlegen selbst bei großen Formaten bearbeiten.

Weitere Ausgestaltungen der Erfindung sind den Unteransprüchen zu entnehmen.

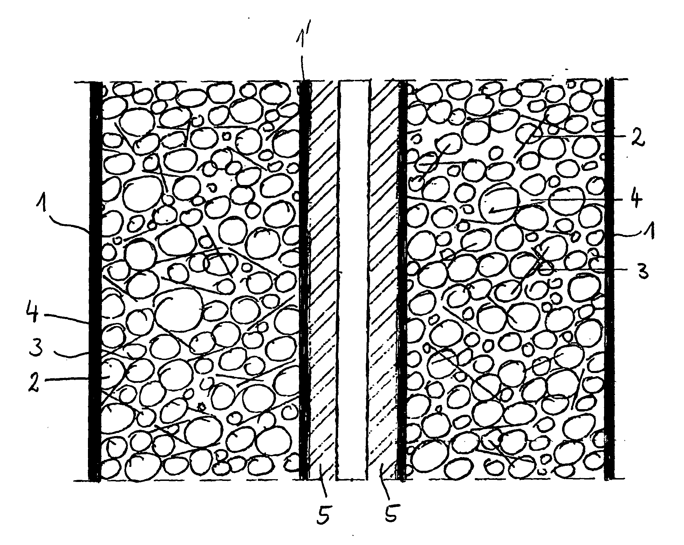

Die Erfindung wird nachstehend anhand eines in der beigefügten Abbildung ausschnittweise im Schnitt dargestellten Ausführungsbeispiels näher erläutert.

Zur Herstellung von Verbundplatten wird beidseitig von einer auf beiden Seiten mit einer Stabilisierungsschicht 1' versehenen Natursteinplatte, die beispielsweise eine Stärke von 15 mm bei einer Größe von 300 cm x 65 cm aufweist, jeweils in einem vorbestimmten Abstand eine rückseitige Stabilisierungsplatte 1 in einer Presse angeordnet. Der Abstand zwischen den Stabilisierungsplatten 1, 1' kann beispielsweise 35 mm sein. Die so auf beiden Seiten der Natursteinplatte befindlichen Zwischenräume werden mit einem Granulat 2, etwa mit einem Schaumglasgranulat mit einer Körnung von 3 bis 6 mm gefüllt. Danach werden die Zwischenräume zwischen dem Granulat 2, die gegebenenfalls zusätzlich Bewehrungsnadeln 3 aufnehmen, mit einem Schaum 4, insbesondere einem Polyurethanhartschaum, ausgeschäumt, der zugleich die Verklebung mit den Satbilisierungsplatten 1, 1' bewirkt. Anschließend wird die Natursteinplatte längs ihrer Mittelebene in einem Sägeschritt durchtrennt, so daß sich zwei Deckschichten 5 aus Naturstein einer Stärke von jeweils 5 mm und damit zwei großflächige Verbundplatten ergeben, die durch den beim Sägeschritt entstandenen Spalt getrennt sind. In diesem Ausführungsbeispiel hat dann die Verbundplatte eine Stärke von 40 mm.

## Patentansprüche

1. Großformatige Arbeits-, Wand- oder Bodenplatte in Form einer Verbundplatte mit einer Deckschicht (5) aus Naturstein, die sich auf einer rückseitigen, einen Schaum enthaltenden Trägerschicht befindet, **dadurch gekennzeichnet, daß** die Trägerschicht eine Stabilisierungsschicht (1') für den Naturstein in Form einer in einem Harz eingebetteten Mineralfasermatte, eine zwischen dieser und einer weiteren Stabilisierungsschicht (1) in Form einer in einem Harz eingebetteten Mineralfasermatte eingebetteten Zwischenschicht (4) aus einem Hartschaum umfaßt, wobei die Deckschicht (5) eine Stärke etwa von 3 bis 8 mm, insbesondere etwa 4 bis 5 mm, aufweist.

2. Platte nach Anspruch 1, **dadurch gekennzeichnet, daß** das Harz zum Einbetten der Mineralfasermatte ein Polyurethan-Kleber ist.

3. Platte nach Anspruch 1 oder 2, **dadurch gekennzeichnet, daß** der Hartschaum ein Polyurethan-Schaum ist.

4. Platte nach einem der Ansprüche 1 bis 3, **dadurch gekennzeichnet, daß** die Zwischenschicht (4) aus einem Granulat (2) besteht, dessen Zwischenräume von dem Schaum ausgefüllt sind.

5. Verbundplatte nach Anspruch 4, **dadurch gekennzeichnet, daß** das Granulat (2) Schaumglasgranulat ist.

6. Verbundplatte nach Anspruch 4 oder 5, **dadurch gekennzeichnet, daß** zwischen dem Granulat (2) Verstärkungsfasern (3) eingelagert sind.

7. Verfahren zur Herstellung einer Verbundplatte, wobei beidseitig von einer Natursteinplatte in einem vorbestimmten Abstand jeweils eine rückwärtige Platte angeordnet, die beiden Zwischenräume zwischen der Natursteinplatte und den beiden Platten mit einem Granulat gefüllt und anschließend ausgeschäumt werden, wonach die Natursteinplatte längs ihrer Mittelebene zerteilt wird, **dadurch gekennzeichnet, daß** die Natursteinplatte zunächst beidseitig mit einer Stabilsierungsschicht in Form einer in einem Harz eingebetteten Mineralfasermatte stabilsiert und als rückwärtige Platte eine Stabilsierungsschicht in Form einer in einem Harz eingebetteten Mineralfasermatte verwendet wird.

8. Verfahren nach Anspruch 7, **dadurch gekennzeichnet, daß** in die Zwischenräume zunächst ein Granulat, insbesondere Schaumglasgranulat, eingefüllt und dann ausgeschäumt wird.

9. Verfahren nach Anspruch 7 oder 8, **dadurch gekennzeichnet, daß** als Schaum ein Polyurethanhartschaum verwendet wird.

10. Verfahren nach einem der Ansprüche 7 bis 9, **dadurch gekennzeichnet, daß** zwischen dem Granulat Verstärkungsfasern eingelagert werden.

11. Verfahren nach einem der Ansprüche 7 bis 10, **dadurch gekennzeichnet, daß** die Natursteinschicht in einer Stärke etwa von 10 bis 20 mm, insbesondere etwa 12 bis 15 mm, verwendet wird.
